(19) Europäisches Patentamt
European Patent Office
Office européen des brevets

(11) **EP 1 505 547 B1**

(12) **EUROPEAN PATENT SPECIFICATION**

(45) Date of publication and mention of the grant of the patent:
**22.12.2010 Bulletin 2010/51**

(51) Int Cl.:
**G06T 17/50** (2006.01)     **G09B 29/10** (2006.01)

(21) Application number: **04018575.3**

(22) Date of filing: **05.08.2004**

(54) **Method for surveying, processing and making use of data concerning the topographic conformation and the morphology of land and road network**

Verfahren zur Vermessung, Verarbeitung und Benutzung topographischer Gestaltungs- und Morphologiedaten einer Landstrecke sowie eines Strassennetzes

Procédé pour l'acquisition, le traitement et l'utilisation des données de conformation topographique et morphologiques d'un terrain et d'un réseau routier

(84) Designated Contracting States:
**AT BE BG CH CY CZ DE DK EE ES FI FR GB GR HU IE IT LI LU MC NL PL PT RO SE SI SK TR**
Designated Extension States:
**AL HR MK**

(30) Priority: **05.08.2003 IT mi20031614**
**16.04.2004 IT mi20040757**

(43) Date of publication of application:
**09.02.2005 Bulletin 2005/06**

(60) Divisional application:
**10165428.3**
**10174525.5**

(73) Proprietor: **GEOTECHNOS S.R.L.**
**34147 Trieste (TS) (IT)**

(72) Inventor: **Righetti, Giovanni**
**61010 Tavullia (Pesaro e Urbino) (IT)**

(74) Representative: **Ferreccio, Rinaldo**
**Botti & Ferrari S.r.l.**
**Via Cappellini, 11**
**20124 Milano (IT)**

(56) References cited:
**DE-A1- 19 746 639**     **US-A- 6 154 152**
**US-A1- 2002 060 784**

- **AUDENINO P ET AL: "Fusion strategies for high resolution urban dem" REMOTE SENSING AND DATA FUSION OVER URBAN AREAS, IEEE/ ISPRS JOINT WORKSHOP 2001 NOV. 8-9, 2001, PISCATAWAY, NJ, USA,IEEE, 8 November 2001 (2001-11-08), pages 90-94, XP010578721 ISBN: 0-7803-7059-7**
- **"Ortofotografia" Retrieved from the Internet: URL:http://it.wikipedia.org/wiki/Ortofotog rafia [retrieved on 2010-05-07]**

**Description**

FIELD OF APPLICATION

The present invention relates to a method for picking up, processing and making use of plani-altimetric data concerning the topography of the land and of the road network. More in particular, the invention relates to a method for picking up and publishing surveys and interactive instruments capable of representing an instrument for the remote design especially in the works of consolidation of hydrogeological avalanches and unbalances and of data concerning the road network of a predetermined land area, in particular for the formation of a Road Registry. The following description is made with reference to these specific fields of application for convenience of illustration only.

Prior art

At present, plani-altimetric surveys of the land are mainly carried out with total earth station.

Current procedures provide that, for the good graphic representation of the land, the topographer surveys the topographic coordinates and the altitude of only the points being considered meaningful.

The earth survey is conditioned by the characteristics of the land under examination and by the accessibility thereof. If the geological conditions do not allow the staff to reach the point to be surveyed, the survey cannot be carried out and it cannot be made available for the design, causing a loss of accuracy in the resulting graphic prints-out.

Through the surveyed points a digital representation of the land called DTM (Digital Terrain Model) follows.

The DTM represents the elevation of the land and it can be generated starting from elevated points or from contour lines. It is generally used for analysis of visibility, of inclination and of exposition, longitudinal sections or cliviometries.

In the case of land surveys the DTM is generated through an interpolation technique among the elevated points and it depends on the accuracy of the acquisition and generation steps of the grid and extraction of information.

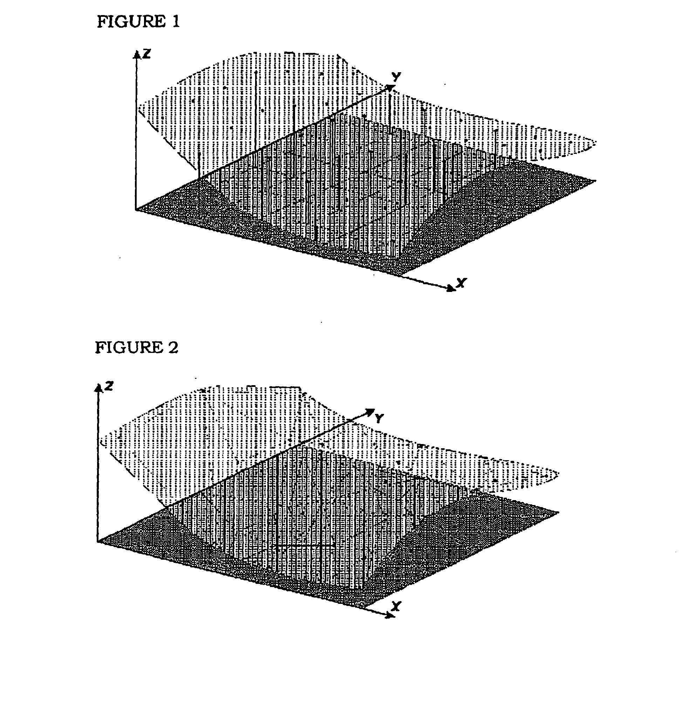

The DTM is based on XYZ coordinates, being XY the location of the point on the bidimentional surface and Z the value of interest of the phenomenon. The point grids can be structured on regular rectangles (as in Figure 1), in the case, however sporadic, when the surveys coincide with the rectangle vertexes.

For optimising the resulting effect the surveyed points must be chosen with accuracy according to the different conformity of the area, limiting, in the meantime, the information redundancy in flat regions (in other words a compromise between the accuracy and the redundancy, which, in terms of calculation, results in a shorter computational time).

Once the solution is defined, some interpolation criteria are chosen, among the best known: the "simple mean" criterion, where the interpolation ordinate is derived as mean of the ordinates of the eight closest points or the "weighted mean" criterion, where $f(x,y) = \dfrac{\left(\sum_1^8 W(x,y) \cdot z\right)}{\left(\sum_1^8 W(x,y)\right)}$ is the interpolation ordinate and W is the inverse of the distance between the ordinates of x and y.

An efficient structuring method of the grid is based on irregular triangle networks called TIN (Triangular Irregular Networks) and defined as triangle grids or irregular tetrahedron cells (in the case of tridimensional representations, Figure 2).

TIN are particularly used for graphic representations of plani-altimetric surveys. Each irregular triangle must be structured so that the circle contained therein does not contain any other point. The triangles thus generated are characterised by ideal angles for the rendering instruments.

The graphic print-out based on the TIN has meaningful variations depending on the dimensions of the triangles (for the poor number of the surveyed data) and it can lead to subsequent visualisation anomalies. The accuracy of this step thus depends both on the precision and on the number of surveyed points.

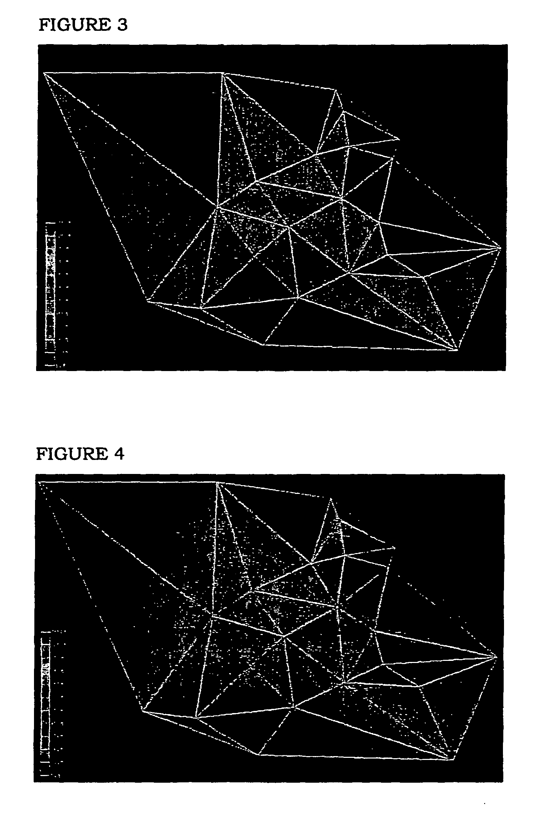

For obviating the anomalies generated by the irregular triangles of wide dimension it is necessary to increase the sampling points, by dividing the already defined triangles into uniformly distributed triangles (Figures 3 and 4).

It is however to be recalled that an accurate survey is very difficult to be realised even if having complex devices such as a laser scanner since the processing of the surveyed data depends on the software used for the analysis, the division and the interpolation of the elevated points.

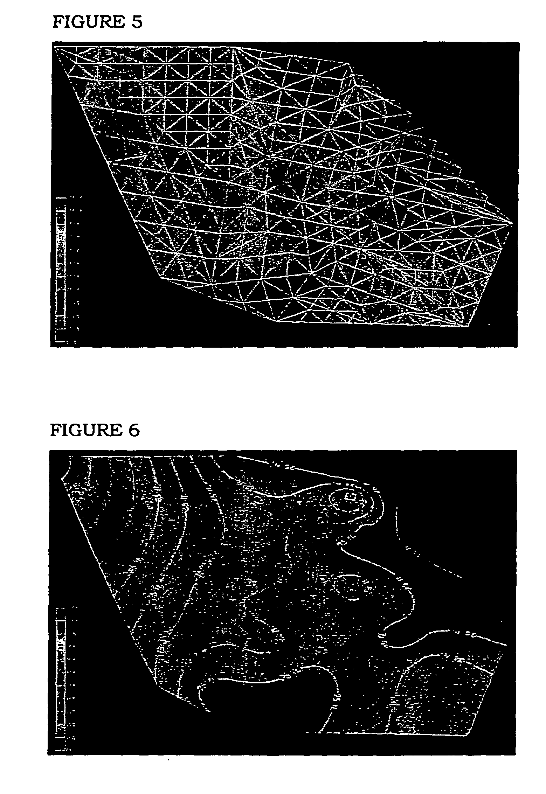

For limiting visualisation anomalies there exist several methods which consist in endowing the irregular faces of the network with colours. A known method is that of endowing with the colour according to the height of the surveyed point and of interpolating the colours of the RGB scale among the surveyed points, as shown by the shades of grey in Figure 5. Figure 6 finally shows the addition of contour lines.

The accuracy of the final representation of the survey thus depends, in a remarkable way, on the number and on the precision of the sampling but also on the used interpolation techniques.

Therefore, also in the case wherein innovative survey instruments are used, the interpretation steps of the acquired points and the difficulty of separating the elevated points relative to the land from those belonging to works, buildings, vegetation and anything else which is placed there-above, keep being delicate.

Similarly, the pick-up and the processing of data concerning the road network of a land area for the formation of a "Road Registry" is sensitive to the above described factors. The "Road Registry" represents an inventory of all public roads on the national territory. Fundamental aim of such inventory is that of defining the consistency of the national road network in a compatible and integrable way with the most known land and estate Registries, at least in a mean and long run perspective.

Moreover, it would be desirable that the authorities owning the roads take care, during the surveying step of the data necessary for the constitution of the Registry, also of the survey of other easily acquirable elements which could be useful for the preparation of a Road Information System (RIS) of the integrated type.

In this context, it is useful to make reference to a Decree of the Italian Public Work Ministry which, addressing to all the authorities owning public roads and more precisely: ANAS, Concessionary Societies for the Motorways, Regions, Provinces and Municipalities, on June 1, 2001 published the modes of institution and update of a road Registry according to art. 13, paragraph 6 of the law decree April 30, 1992, n. 285 and following modifications.

This Decree provided that for ANAS and Concessionary Societies for the Motorways the relative Registry had to be realised within two years from the coming into effect of the Decree itself; whereas, for the Regions the term of three years has been scheduled and for the Provinces and for the interurban municipal roads, having paved width not lower than 5,50 metres, the term is of four years. The Registry should be ready within five years from the coming into effect of the above Decree also for the interurban municipal roads, in particular for those having paved width lower than 5,50 metres and for paved urban roads.

As for the road axes, the rules impose that they are surveyed as a sequence of points and that for each road element, rectilinear or curvilinear, a sufficient number of points has to be surveyed for deducting the geometry therefrom with a procedure known as "minimal squares". The errors of the flat coordinates of the road axis points must be contained within a metre.

The precision of the geodetic elevation of the points constituting the longitudinal profile with respect to the national altimetric reference must be better than 5,0 metres.

In the determination of the longitudinal profile the relative precision must be such that the maximal error of the inclination is lower than 1%, i.e. it must be lower than 10 centimetres if calculated between points being less than 10 metre spaced. As for the cross sections, the maximal error in the cross inclination must e contained in 1/100 or 0.5 centesimal degrees. The error in the measure of the width of the road (carriageway and side) must be contained in the absolute maximal measure of 10 centimetres. The rules also impose that the measure must be provided at any variation of width of the road being higher than the indicated precision. Also for the formation of a Road Registry, thus, such an accurate survey is very difficult to be realised even of having complex devices such as a scanner laser.

The German patent application DE 197 46 639 discloses the acquisition of digital images of a terrain, including natural and artificial objects, wherein the acquired data define 3D images including altimetric data. Laser ranging techniques are described to take digital images from different perspectives on the land and to integrate these data with data acquired by aerial survey, thus obtaining 3D scene of objects and scene. However, these document requires that images from different perspective are taken to obtain a correct representation. Another prior art solution is disclosed in document US 6 154 152 relating to a road maintenance system for maintaining data of an information center by adding data collected with vehicles and means for evaluating the reliability of data collected with such vehicles. In particular, "GPS instrumentation on-vehicle system" are used to collect data which are integrated into the road maintenance system.

The rules also report a series of functional and structural elements which would be inserted in the Road Registry. Hereafter a list of such elements is reported in order to provide a series of useful definitions for the following description:

    1. Junction; it normally represents the intersection point of the axes of two road elements.

    2. Traffic Area; it represents an area inside of which vehicle movements occur.

    3. Road element; it is a linear entity delimited by two junctions singled out by an ordered set of points. It represents, in general, the axis of a road section with single carriageway.

    4. Section of the road element; it is a portion or section of the road element.

    5. Pavement of the road; it is the typology of the road surface.

    6. Road body; it defines the conformation of the road.

7. Bridges, viaducts and subways; they represent intersections with overhead sections.

8. Tunnels and overpasses; they represent intersections with sections being partially hidden to the sight.

9. Roadside dips; they are noteworthy side irregularities.

10. Embankments; as previously they can be noteworthy. side irregularities.

11. Protection of the road body; they represent delimitation and protection barriers of the road network.

12. Protection of the surrounding environment; they represent delimitation and protection barriers of the environment bordering on the road.

13. Lightning systems; they are structural elements easy to be identified and classified.

14. Rest areas; functional elements which identify appointed parking areas.

15. Retention devices.

16. Service outbuildings.

17. Hydraulic continuity works; channels, locks, etc..

18. Accesses; entrances and passageways for cars,....

19. Landmarks or kilometric signals; limits of indication signals or land boundaries.

The specific properties of these functional elements are also described by one or more characteristics defined by the national rules.

Also from this list it is easily understood how the variety and multiplicity of situations that can occur in the real road network developed on a predetermined land area tries sorely the human capacities of surveying and managing at best the huge amount of surveyable data by a deep test of the land.

The rules in fact do not suggest any mode on whose basis of which it is possible to design devices or apparatuses which can in some way soften the burden and decrease the costs of the complex realisation step of the Road Registry.

The above described work can thus imply a very burdensome cost in terms of: means and human resources to be dedicated to the survey step, means and human resources to be dedicated to the pick-up and processing of the data as well as means and human resources to be dedicated to the publication of such data for applications of public and/or private interest.

A problem spontaneously arises in fact on how it is possible to survey and manage such a varied and diversified amount of data, even if having a previous organic vision of how to use these data once they are picked up.

In other words, technologies or methods are not available right now which allow to pass, quickly and easily, from the surveyed data to a consultation instrument for the design.

The technical problem underlying the present invention is that of devising a method for picking up and processing data, having such functional characteristics as to allow an integrated management of all the information starting from the initial survey step up to the design step without having to use any specific computer product although treating huge amounts of data.

Such a method should also allow to update or survey ex-novo the topographic situation and the morphology of a predetermined land area in very quick times and with relatively reduced costs overcoming the limits and the drawbacks affecting the currently employed solutions according to the known art.

This method should also provide consultation mechanisms of the above described prints-out in favour of plural professional figures, by using a common access point.

Summary of the invention

The present invention is set out in the appended claims.

The idea underlying the present invention is that of using the most innovative techniques and methods within the land survey field by assisting all the steps of an engineering project applied to the land with instruments being technologically advanced and proportioned however with the need of the single professional figure which participates in the project.

More in particular the steps of land and road network survey, publication of the graphic print-out and consultation thereof need hardware and software supports of different cost and complexity. As it will be seen the consultation instruments will have the possibility of being unburdened (in economical and logic terms) thanks to the centralisation of the visualisation motor on hardware dedicated to the publication, also ensuring the univocality of the project whereon to work.

The hardware and software burden supporting the method should be suitably weighed up so that the complexity of the graphic motor is devolved on a central dedicated computer, ensuring an economical and essential configuration to the peripheral consultation devices.

These latter advantageously use advanced computer technologies such as the ActiveX components for the retrieval of the prints-out representing the land morphology from the main computer. These instruments will also allow the change of the prints-out and the saving thereof in the central computer itself, reducing the cost of the hardware and the need of highly specialised know-how on the peripheral devices.

Moreover, from the processing of the tridimensional models obtained by the laser points and from the treatment of the laser points, the determination will follow of a series of plani-altimetric prints-out (sections, profiles, etc.) which will have the possibility of being published on a network connected server and subsequently consulted and modified.

The characteristics and advantages of the method according to the invention will be apparent from the following description of an embodiment thereof given by way of indicative and non-limiting example with reference to the annexed drawings.

Brief description of the drawings

Figure 1 shows a schematic view of the interpolation between the elevated points in a DTM representation method (Digital Terrain Model);

Figure 2 shows a schematic view of the interpolation between the elevated points in a TIN representation method (Triangular Irregular Network);

Figure 3 shows a schematic view of the base interpolation between the elevated points in a TIN representation method; refining techniques can be applied to the base interpolation as shown in the schematic view of the following figures.

Figure 4 shows a schematic view of the interpolation between the elevated points in the TIN of figure 3 associated with an interpolation of colours in the RGB scale. The example figure represents a surface of 300 metres of longitude and 100 of latitude with sampled points with mutual distance not higher than 10 metres;

Figure 5 shows a schematic view of the interpolation of colours in the RGB scale between the elevated points in the TIN of figure 3 together with the increase of the number of the elevated points;

Figure 6 shows the print-out of the previous figures with the addition of contour lines.

Figure 7 schematises the use of the ActiveX components by client web.

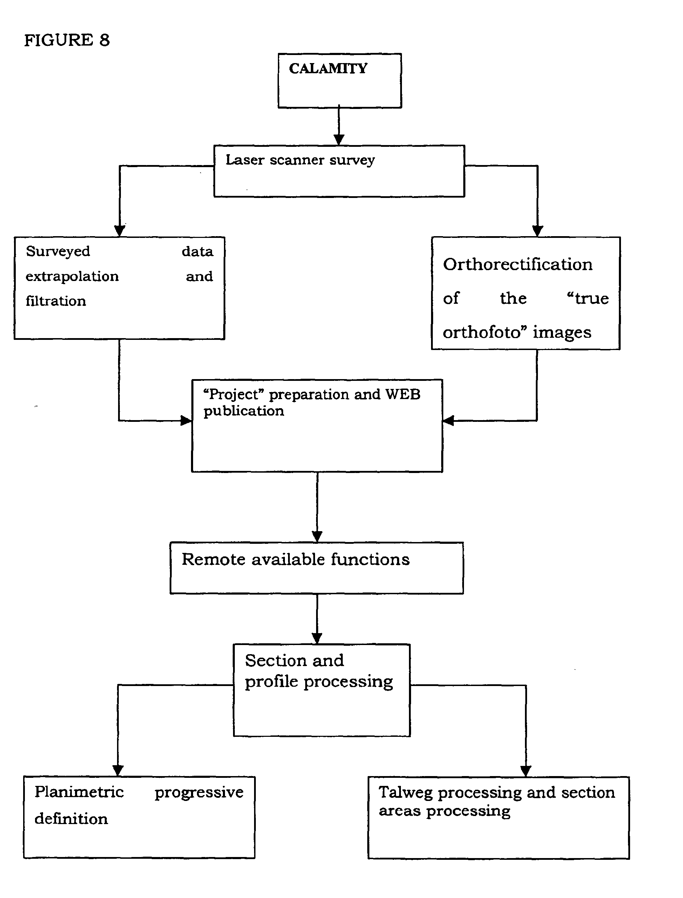

Figure 8 shows a schematic block view of a device system for the activation of the method according to the invention.

Figure 9 shows a graphic interface available on the local computer, by means of which the consultation/change of a saved project, the creation of new projects, layouts, profiles, sections are to be required.

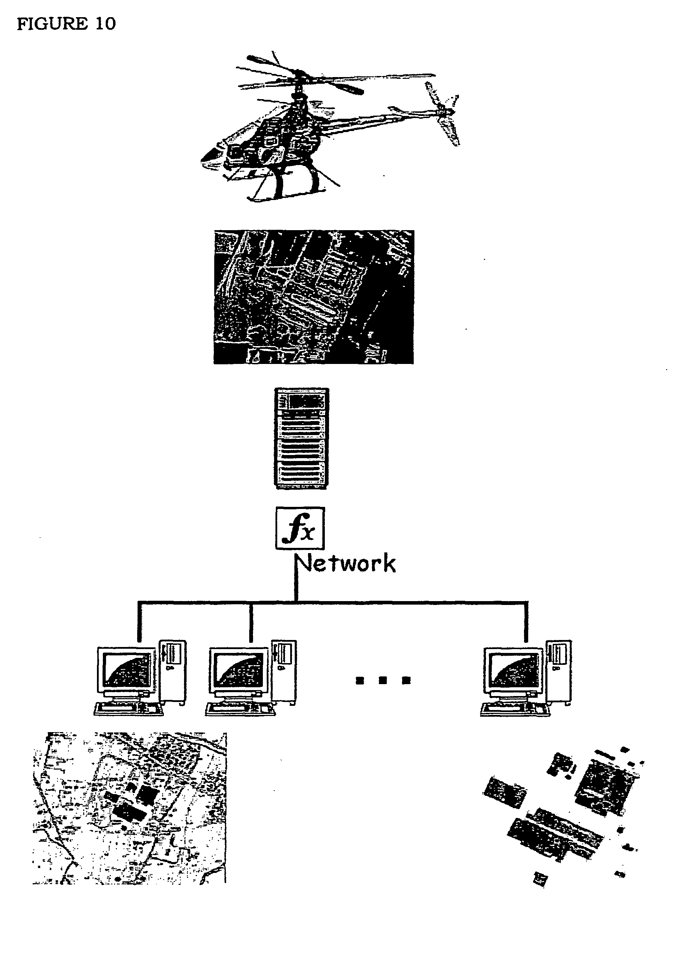

Figure 10 shows a schematic view of the device system for the actuation of the method according to the invention.

Detailed description

The land area interested by the method according to the present invention is framed by a scanner laser mounted on board of an aircraft appointed to a photographic survey from above. The aircraft is generally an helicopter provided with equipment for topographic survey.

The method according to the invention is set out in a sequence of operative steps thus detailed:

A first step provides a topographic survey from the helicopter with high frequency LIDAR technology associated with an inertial system of navigation which allows to obtain high resolution, colour, digital, photographic images.

The LIDAR technology (LIght Detection And Ranging) is an alternative to the traditional acquisition techniques and it consists in the survey by means of scanner laser by exploiting a principle similar to that used by the RADAR. The lidar instrument transmits the light to the surface to be surveyed, it interacts with the destination and it is modified thereby. Part of the light is reflected and transmitted to the laser instrument in response.

Supposing that the light speed is c = 3.0E8 m/s, the echo time of the Lidar can be calculated and as a consequence the land distance can be surveyed:

1 NS = 0,15 m.

1 microsecond = 150 m.

10 microseconds = 1,5 km.

100 microseconds = 15 km.

1 millisecond = 150 km.

There exist different types of Lidar instruments, among the most known, "range finders", "dial", "doppler lidars". The first types of Lidars are the most suitable for the topographic surveys whereas the dial and doppler Lidars are more suitable respectively for measuring the concentrations of polluting molecules in the atmosphere and the speed of a moving body.

The Lidar technology, both aerial and terrestrial, offers a higher precision than the most traditional acquisition photogrammetric methods of the digital models, ensuring the technicians in the field the possibility of determining with sufficient precision the position of a very high number of topographic points with high sampling density.

The surveyor is also released from the accessibility of the land being enabled to use the scanner laser from an helicopter. The results of such surveys are constituted by clouds of irregularly spaced tridimentional points concerning any type of object, from the land to the vegetation, to buildings, to motor vehicles. The survey from helicopter also gives back high resolution, digital images of the land (up to 5 cm/pixel).

The photographic images are stored in an electronic file together with the files of laser points with tridimentional coordinate x-y-z. The acquired photos will be called hereafter with the term "orthophotos", i.e. photos orthogonally referred to the land area.

A second step provides a classification and insulation of the laser points relative to the land and the check of a correct georeference of the orthophotos deriving from the control of the elements deducted from the DTM with the elements visible in the image.

At this point a processing is carried out of the digital model of the land with superimposition, above such model, of the digital images. To this purpose a mesh of irregular triangles is generated and associated point by point with the georeferenced orthophoto by means of a processing program which carries out the connection.

All the data obtained during this superimposition and comparison step are loaded in a single database residing inside an electronic computer which serves as data server.

A photointerpretation step follows by means of video digitisation which confers the real graphic clothing to the TIN network; after vectorial graphic elements are affixed:

- The drawing of the existing or design road axis of project in the case of road works or works of the river axis in the hydraulic arrangement projects.

- The niche profile of the avalanches and of the hydrogeological unbalance phenomena.

- The plant perimeter or space of buildings and existing works.

A subsequent operative step provides a division by road sections of the cartography and of the data processed in the digital format.

Once the above elements are singled out the road will be divided by sections and organised by giving specific tasks to teams of surveying technicians active on the land and provided with portable computers.

Advantageously, according to the invention, an earth survey follows for those objects which cannot be surveyed from the helicopter or which cannot be photointerpreted such as for example: multilevel parkings, allowed running direction; type of traffic island; pavement of the road; tunnels and overpasses; roadside dips; kilometric landmarks; commercial advertising and traffic signals; etc..

Each team of surveying technicians active on the land area is provided with at least one electronic computer of the portable type with relative video screen, for example of the notebook or palmar type, capable of managing the orthophotos, suitably compacted, of the entire surveyed land area and without altering the visual characteristics thereof.

Suitable applicative programs held by said portable electronic computers allow the surveying technicians to visualise the orthophotos and all the photointerpreted prints-out of the area interested by the survey and to easily single out both the geographic references associated with the orthophotos and the structural and functional elements identified by relative graphic symbols.

Moreover, a GPS instrument, connected for example through a serial gate of the portable computer, allows an easy orientation and geographical positioning of the technician according to the photographic image visible on the screen.

Moreover, in case of need, it will be possible to remotely control the paths of the teams or their localisation by means of a "GPS/GSM or GPRS" connection from an operative unit also intended for overseeing the surveying activity.

A suitable dedicated software and a digital photo camera held by each team allows to carry out photographic surveys on the land by downloading in the portable computer, through a USB gate or else, the images relative to the traffic signals and to the commercial advertising.

Moreover, computers also avail themselves of tridimensional digital models of the land under examination in order to process, as field check, sections, profiles and running simulations. For structuring the pick-up of the information in the field a routine of quick preselection of the data to be surveyed is provided.

The set of the vectorial and alphanumeric data picked up by surveying the land are periodically transmitted to the operative unit by means of GPRS communication or through another type of connection of the computers of the surveying technicians towards the central server.

The safety of the data is ensured through the installation of a so called firewall (HW and SW); the daily back up on magnetic support is also carried out.

The method described thus provides a land survey through scanner laser, or similar survey typology, a subsequent post-processing of the digital photos and of the laser points and the subsequent photointerpretation of the digital images with separation of the surveyed points non belonging to the land but to objects, buildings and anything else placed thereon; everything with remote managing modes. The thus surveyed data are completed with surveys carried out in situ by a team of surveying technicians active on the land area and provided with at least one electronic computer and subsequently transmitted to the central computer.

For making the above described surveys usable by more professional figures local devices (client) are used being connected to the main computer through a local network or internet.

The hardware and software burden of the graphic motor is devolved on the main computer; the local devices used for the intranet or internet consultation through Microsoft Internet Explorer browser can maintain an essential configuration thanks to the ActiveX technology.

All the ActiveX or OLE technology, OLE being the name used for indicating the realisation of composed documents, is based on the fundaments provided by COM (Component Object Model).

COM provides all the standards and the rules for the definition of the objects and their interfaces, and it also includes the software necessary for the implementation of the functionalities offered by these technologies. COM is a specification for the construction of code modules (objects) which serves for indicating how other programs can accede to that code.

In other words, it is a binary standard which makes the objects independent from any tool or programming language.

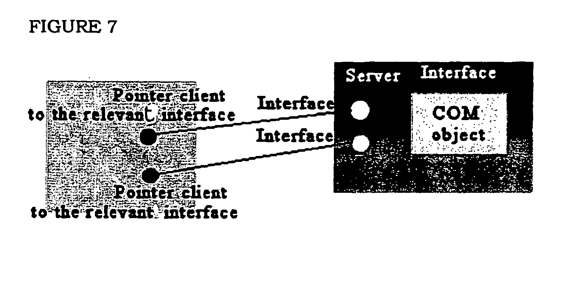

Each COM object supports one or more interfaces, each of them containing a certain number of methods, i.e. functions which perform a specific action and which can be called by the software which is using the COM object (exactly the client of such object, as shown in Figure 7).

The specification for the ActiveX controls exactly does this, i.e. it defines the standards for software components, specifying a set of interfaces which will have to support the COM objects for displaying determined functions.

But the specification of the ActiveX controls also does more: each component must interact with its local device (client), i.e. with the code which uses them, in the most efficient way, then this specification also defines all the rules necessary for the realisation of the so called Control Containers.

A Web browser as Microsoft Internet Explorer is a powerful example of use thereof.

In other words, the proposed method allows, during the consultation step of the graphic prints-out, to unburden the user from software developed and installed ad hoc on the machines, reducing the costs of installation, management and maintenance, besides the costs for training the staff, to the minimum.

The controls are completely stored in the browser system and they are carried out on demand allowing the creation of Web interactive pages which will allow, i.e., a user to interact with them without using the added software.

The applicative manages the authentication by means of username and password. The used technology exploits ActiveX controls realised in Visual C++ as for the communication/processing and in Visual Basic for the user interface.

The main page contains:

1. the main ActiveX control for managing the interactivity with the user and carrying out the local processing of the data sent by the server.

2. the cartographic ActiveX control provided with a vectorial editor for:

A) Visualising the orthophotos: at each change of the framed region (zoom, pan) through a request by means of http protocol to the raster motor. The dimensions of the available cartography do not affect the performances, since only one image of the dimensions of the visualisation window is transmitted each time by the main computer to the local device.

B) Drawing a layout by means of digitization.

C) Digitizing a set of sections, according to various modes.

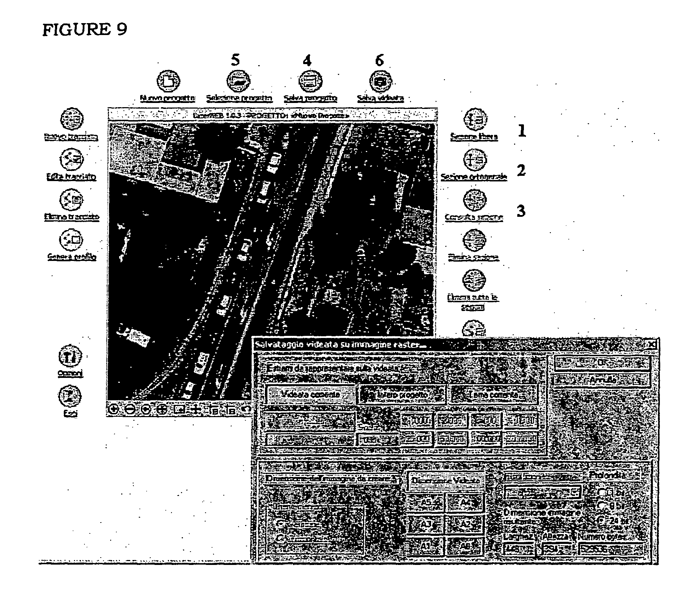

. Free section, by singling out a straight line section in any area (point 1 of figure 9 indicates how, through the user interface, a new free section can be created).

. Section orthogonal to the layout in a point manually singled out, of pre-designable width (point 2 of figure 9 indicates how, through the user interface, a new orthogonal section can be created).

. Sections orthogonal to the layout automatically generated with pre-designable terminable equidistance and pre-designable width.

. Automatic numeration of the sections which cross the layout.

D) Automatically generating the so called talweg as joining some minimum points of the sections defined along the layout.

E) Singling out critical sections for the rate of the waterways, i.e. having area lower than a threshold allotted according to the ratio between the same and the water outflow speed (point 3 of figure 9 indicates how, through the user interface, an already memorised section can be singled out in the central computer).

F) Saving the design, i.e. the set of layouts and sections (point 4 of figure 9 indicates how, through the user interface, a design already memorised in the central computer can be singled out).

G) Modifying the processing of a beforehand saved design (point 5 of figure 9 indicates how, through the user interface, a design already saved in the central computer can be detected).

H) Saving the current cartographic display in a image file (point 6 of figure 9 indicates how, through the user interface, the current display can be saved).

3. The ActiveX control for the communication via socket with the 3D motor. When starting the client application this component automatically connects to the socket of the 3D motor. For generating each 3D print-out, the main ActiveX control uses this component to send to the main computer a request containing the lost of the 2D coordinates in correspondence of which the elevation is to be obtained. The main computer responds with a message containing the list of the elevations.

The 3D prints-out (profiles and sections) are visualised in a pop-up window, which allows to:

- visualise the altimetric graphic by performing zoom and pan

- insert intermediate points (candles) and any progressive

- save what has been visualised in a DXF file

- in the case of the layout profile, automatically generating in the 2D design of the main page some orthogonal sections in correspondence with the intermediate points inserted by the user.

The main computer which supports the computer architecture underlying the above described method is instead constituted by a web server provided with:

1 A 3D motor which manages the publication of the TIN network elevation models, allowing the consultation, by a remote application, of altimetric data by means of geographic queries. The main computer which hosts the 3D server is made of a feasible, always active on the computer, hearing the requests of the peripheral devices. Independently from the complexity of the TIN, the peripheral device-main computer data traffic will be made of only the list of planimetric coordinates and of the corresponding list of elevations in response.

2 A raster cartographic motor for the publication of the orthophotos organised in a continuum of virtually infinite dimensions (tens of GB of images are managed without any difficulty nor loss of performance). The image database is divided in very small units organised in pyramidal levels.

3 A database for managing

- User accounts (username and password)

- Published geographic designs, which can be consulted by one or more registered users.

Moreover, an applicative for the management of the raster data ensures the performances, in terms of data access speed, through a data organisation based on the tassellation of the images and on so called pyramid layers.

In this way, whatever the dimension of the data bank is, the server, to respond to the requests of the user client, processes each time only small portions of data making all the process extremely quick.

As for the data compression, the server is not exclusively based on a particular algorithm, but it leaves the user free to decide each time the technology to be used among the standard ones. This versatility is particularly important since, differently from MrSID and ECW, where the algorithms are of the "Lossy" type, i.e. they deteriorate the image and they thus lose information, which are fundamental, in view of the tolerances imposed by the rules, with this application the user can choose whether to use "lossy" or "lossless" compressions.

Besides the horizontal navigation in a univocal cartographic system, the applicative also allows the vertical navigation among georeferenced cartographies with different reference systems.

The system according to the invention also provides the mapping, continuous in time, of the irregularities of the asphalt and of particular anomalies. In fact, once the road network has been surveyed through the above described method, it is necessary, in particular for motorways and for interurban roads with highly intense traffic, to quickly intervene with ordinary and extraordinary maintenance works.

For determining the typology, the risk and the placement of the deformations one will proceed as described hereafter by using the following components:

1. A portable computer;

2. A specific applicative installed in said portable computer;

3. A "GPS" device;

4. An odometer, i.e. a device used for measuring the distance run by a moving vehicle.

The applicative, besides availing itself of the reference cartography being georeferenced and organised as previously described, associates keyboard controls with a database wherein all the various anomalies are coded. As an alternative, it is possible to carry out this survey also in the absence of cartography. Moreover, where altered or little resistant concrete is signalled, the applicative provides the option of inserting the work in the database and of intervening afterwards with the combined Sonreb surveying method.

In this way, while running a road section, the "GPS" device constantly determines the position of the vehicle, which is thus memorised in the computer, while the operator univoquely identifies a deformation or the degradation of the concrete which will be memorised on the database.

In so doing, a database is generated having associated:

1. the type of anomaly

2. the "wgs 84" coordinates

3. possible notes

Everything is implemented with a management of the maintenances on the basis of the type of deformation, of the mean traffic of the road, etc..

The odometer is necessary during the passages through tunnels, where the "GPS" device is not able to memorise anything, so in the database all the data relative to the anomalies would converge, but not those relative to the position. For obviating this problem in these cases it is useful to employ the data coming from the odometer provided with a tachometric encoder.

All these data will be integrated with the "GPRS" methods or by means of upload from cd, from network or from lan to the "GIS-WEB" system as all the other above described data.

Once the anomalies of the asphalt are mapped an index of intervention priority can be drawn on the basis of a specific applicative.

With the aim of evaluating the compression resistance of the concrete in situ, the use of "Sonreb" method is provided, through the combination of two values, the longitudinal speed of the ultrasonic waves and the rebound sclerometric index.

The advantages of the method derive from the simultaneous use of sclerometer and ultrasounds; in fact the combination of the values obtained by such controls allows the nullification of the influence of the humidity and of the concrete seasoning, since these parameters have, with equal effective resistance to compression, an opposite effect on rebound index and propagation speed of the ultrasounds.

The combination also allows the reduction, with respect to the ultrasounds, of the influence of the inert magnitude and nature, of the cement dosing and type and of the possible additive used for the concrete gush.

Once the rebound indexes and the ultrasonic speeds have been experimentally determined, the pair of obtained values is reported on a cartesian diagram, where the abscissas report the sclerometric indexes and the ordinates the speed.

The compression resistances (Rck), obtained with the combined method, have been surveyed by means of the following relation which analytically expresses the trends of the isoresistance curves, experimentally determined on standard concrete specimens, whereon the values of the ultrasonic speeds and of the rebound index have been first surveyed and, afterwards, the compression breakage tests have been carried out:

$R_c$ (N/mm$^2$) = 7.695 X 10$^{-11}$ X Im$^{1.4}$ X V$^{2.6}$ .

Where: Im is the sclerometric index and V is the ultrasonic speed.

The values of the sclerometric indexes, of the ultrasonic speeds and of the possible obtained compression resistances are reported in the following table n. 1.

Table 1

| Possible resistance of sonreb method | | | | |
|---|---|---|---|---|
| ORDER N. | STRUCTURE | REBOUND | SPEED | RESISTANCE |
| | | Im | Vm (m/s) | Rc (N/mmq) |
| 1 | Beam n. 1 | 46,4 | 2925 | 23,5 |

According to the type and to the degree of anomaly and deformation, the managing authority, if owner or tenant of the maintenance means fleet, can, thanks to the software applicative, manage the interventions on the basis of the priorities and of the availability and vicinity of the vehicles. In fact all the above motor vehicles will be localised in cartography thanks to an apparatus GPS and GSM, which surveys the latitude and the longitude of the vehicle in the WGS84 coordinate system and it transmits them by means of a data GSM board to the management and control server, equipped with GSM modem. The position of the means is therefore visualised in real time, during a network connection, on the base cartography, and it is further possible to consult, in a second time, the path history.

The method according to the invention also provides an analysis of the acoustic pollution generated by the vehicular traffic along the road network, by using an applicative installed in the computer. Such applicative, taking into account the digital model of the lend, of the works and of the vegetation, applies a calculation for simulating the intensity of the sound and surveying the isophonic curves before and after the realisation of stratagems such as for example sound absorbing barriers.

This applicative calculates the intensity of the sound for points being spaced from one another at the desired distance and being distributed along linear sections, orthogonal to the road axis and also spaced from one another at the desired distance.

On the basis of the punctual dispersion of the above values, the applicative determines the distribution of the isophonic curves by endowing them with different colours according to the intensity of the sound, this is carried out by means of suitable mathematical functions available in the literature.

The resulting print-out is compared with data derived from the national rules and when it exists with the local one, thus providing a useful support in the singling out of the critical sections and in the choice of the mitigating works.

The applicative allows to quickly estimate the acoustic pollution in all the land surrounding the road network besides allowing the simulation of the acoustic pollution for different types of projects and barriers also calculating complex situations, such as surveyed and trenches to be realised.

In collaboration with the security forces such as the Metropolitan Police, Motorway Police and Carabinieri, the precise localisation of the accidents referred to each road is provided. With the help of high resolution digital images, of the digital model of the land and of the earth shot digital clip, a suitable analysis of the places and the singling out of possible environmental concauses is provided, besides an accurate analysis of the visibility in the curves.

The many particular advantages of the invention are hereafter listed:

a. the topographic survey with scanner laser from the helicopter ensures the respect of the severe tolerances provided by the Decree allowing the errors in the measure of the road width (carriageway and side) in the tolerance of ten kilometres. The measure is provided at each variation of width of the road higher than the indicated precision.

b. the topographic survey from the helicopter and the automatic processing of profiles and sections on a digital model of the land ensure a quick performance of the work.

c. the equipment held by the surveying technicians, i.e. notebook, digital photo camera, GPS, dedicated software and applicatives for the management of the orthophotos of the surveyed district, make it easy: the operations of earth survey; the orientation of the technicians in little familiar places or regions; the structured and organised pick-up of the information by means of a routine of quick preselection of the objects; the pick-up of the observations also in case of strong wind, which usually complicates the reporting in situ of the information on paper sheets.

d. each surveying technician will be responsible of the insertion in the portable computer of the surveyed information, therefore he will have the possibility of immediately realizing the possible incompleteness of the surveyed data or of possible incongruities.

e. the realisation of a single database managed in internet, will simplify the coordination operations of the works, offering the effective current status of the works in real time.

f. Through the allotment of a "user name" and of a "password" also the work employing authority will be updated about the effective current status of the works in real time.

The method and the device according to the invention thus solve the technical problem and they allow to prepare and to provide, in an efficient and quick way, a data bank for the formation of a Road Registry.

Moreover, the method according to the invention also allows to manage in an excellent way:

- the analysis of the acoustic pollution generated by the vehicular traffic along the road network, by means of a software applicative which, taking into account the digital model of the land, of the works and of the vegetation, applies calculation algorithms capable of representing the sound dispersion in the environment;

- the realisation of a survey system of faults and anomalies on the road elements,

- the management of the vehicles interested in the interventions of the road network maintenance, by means of software applicatives and systems developed with GPS and GSM technology, according to the availability and placement of the means and to the dangerousness of the deformations and of the anomalies of the road elements;

- a precise localisation of the road accidents and analysis of the environment.

In summary, the data derived by the method described by the present invention for the methodological implementation of the road safety, can be summarised in:

1. *plani/altimetric survey* of the road body, by distinguishing the carriageway, the road side, the sidewalk, the cycling track and the traffic island;

2. *cross sections* of the road body and of the elements of its concern, with centimetric pitch along the profile trend and with maximal error in the cross inclination contained in 0.5 centesimal degrees. The distance between the sections along the road axis is, to the administration discretion, metric and variable;

3. colour digital clip of the road network shot with earth camera. It will have to be put in relation with the geographic coordinates of each point of the road axis and therefore each single frame will have the possibility of being video recalled by the planimetric layout of the road in the cartography, allowing the user the perspective view, in the direction of the running sense, from each point of the road axis;

4. georeferenced information relative to the *traffic signals* which can be visualised through masks which will have the possibility of being selected directly in cartography. In particular each single mask will have to contain: type of support; height of the first earth signal; distance from the road edge; status of the support maintenance; type and dimension of the traffic signal; class of the film; overall status of the signal; firm and year of manufacture; number and date of ruling; photo;

5. georeferenced information relative to the *commercial advertising* which can be visualised through masks which will have the possibility of being selected directly in cartography. In particular each single mask will contain: dimension and characteristics of the panel; height of the panel from earth; distance from the road edge; authorisation; expiry of the authorisation; advertising firm the concession is relied on; photo;

6. georeferenced information relative to the *petrol stations* along the surveyed road network which can be visualised through masks which will have the possibility of being selected directly in cartography. In particular each single mask will contain: name of the firm managing the facility; address and telephone number; photo;

7. georeferenced information relative to the *public transport stops* which can be visualised through masks which will have the possibility of being selected directly in cartography.

The above information integrated in the Road Information System, allow to evaluate the visibility of the traffic signals and provide the user with useful information for the analysis of the dynamics and of the frequency of the accidents, making it possible the programming and the provision of the maintenance and substitution costs of the elements under examination, it is thus possible to pass very quickly from a type of maintenance "on damage or misfunctionality" to a programmed one.

The consultation of the crossed sections united with the cartographic representation of the surveyed area allows to evaluate the prevailing geometric characteristics of the road network which, together with the weather factors, the type of economic structure and instalments, determine the effective consistency of the "environment risk conditions" under which the road accidents occur. The information relative to the sections along the so called guard big dips adjacent to the road network will allow evaluations on the hydrogeologic status and of the hydraulic rate and the environment risks related to a bad functioning thereof.

The integration of the cartographic support with the digital clip together with the possibility of simultaneously recalling all the above listed punctual information is of particular interest; i.e. the cross sections of the road body and all the information relative to the Road Registry as well as to the traffic signals, commercial advertising, public transport stops and petrol stations.

The internet dynamic consultation allows each user or worker responsible of the road maintenance or safety to operate or implement in a multidisciplinary mode on a single data bank.

The site can in fact provide an interface which can be filled in for example by authorities as the Carabinieri Force, Motorway Police, Metropolitan Police, Province and Region, singling out for each of them:

. place, date and time of the accident;
. nature of the accident (among vehicles or between vehicle and pedestrian; among vehicles being both running or between a vehicle being running with a stationary one, etc.);

- typology of the accident (pile-up; frontal; side; road exit);

- deceased and injured;

- damages to things;

- etc.

The information contained in the database are thus put into relation with the available digital cartography making it possible the geographical localisation of the accidents.

The method according to the invention thus has the advantage of allowing a plurality of users to interactively interact on a same and homogeneous survey of the land, thus allowing to process profiles, sections, areas, etc. without having to use any specific computer instrument for this kind of applications as for example a CAD or similar products.

Moreover, the method according to the invention allows to operate on high resolution, precise surveys, which necessarily results in a huge amount of data which would make critical the loading and the processing of the information also by specific computer instruments, exactly such as CAD commonly used for the design. Instead, the method of the invention makes it possible the processing and the design of the land images by means of Internet also with the treatment of huge amounts of data.

**Claims**

1. Method for picking up, processing and publishing data concerning the topography and morphology of a predetermined land area or of a road network of a predetermined land area, for example for the formation of a Road Registry, of the type wherein at least one survey is carried out from aircraft or helicopter, thereby providing a plurality of digital images orthogonally referred to the land and 3D laser points of a land portion through LIDAR or similar technology, said land portion having areas with morphologic variability or having peculiar structural elements, comprising the following steps:

    - a) deriving structural elements from a Digital Terrain Model, the DTM being based on 3D laser points and insulating the 3D laser points relative to that predetermined and area;

    - b) interpreting, analysing and processing said digital images with differentiation and separation among the structural elements on the land and elevated points belonging to the land itself,
    - c) checking that the structural elements derived from the DTM correspond to the structural elements separated by said digital image, for a correct georeferencing of said digital images;
    - d) superimposing said digital images to the DTM relative to the land;
    - e) transmitting and memorising said superimposed images in a central data memorisation processing device, included in a main computer, with subsequent transmission of said images and 3D laser points data and/or processing and exemplifications thereof on demand of peripheral network devices connected to the main computer;
    - f) integrating the information contained in said digital images and 3D laser points by means of a real time survey on the land of said plurality of structural elements or of further structural elements by means of a portable survey and processing unit carried out by a team of surveying technicians active on the land and provided with at least one electronic computer for picking up through laser scanner vectorial and alphanumeric data that are periodically transmitted to said main computer by means of a GPRS communication or through another type of connection of the computers of the surveying technicians toward the main computer;

    said survey on the land interesting structural and functional elements which cannot be surveyed from above or by means of said interpretation step.

2. Method according to claim 1, **characterised in that** said plurality of digital images of the land is beforehand subject to a comparison with a tridimensional digital model of the same land with obtainment of an image being correct and provided with geographic references.

3. Method according to claim 1, wherein an analysis is further provided of the acoustic pollution generated by the vehicular traffic along the road network, by means of an applicative algorithm.

4. Method according to claim 3, wherein said algorithm, taking into account the digital model of the land, of the works and of the relative vegetation, applies a calculation for obtaining isophonic curves and representing the sound dispersion in the environment, before and after the realisation of possible stratagems such as for example sound absorbing barriers.

5. Method according to claim 1, **characterised in that** said interpretation step of the images occurs by means of video digitisation of the land and of functional and structural elements placed thereon and by means of association of graphic symbols with each image.

6. Method according to claim 2, **characterised in that** a set of data defined by levels and sublevels is associated with each image, each level being associated with a functional or structural element to be surveyed.

7. Method according to claim 2, **characterised in that** said interpretation step of the images allows to fill in a database by associating descriptive information of the area, of the line, of a given point or of a given volume with each image, everything being automatically calculated and filed.

8. Method according to claim 1, **characterised in that** said survey on the land is carried out by availing of a GPS instrument, connected to an input gate of said processing unit, for allowing an easy geographical orientation and positioning according to the photographic images available in said peripheral unit.

9. Method according to claim 1, **characterised in that** said survey on the land is carried out by means of a digital photo camera provided at each peripheral unit for carrying out photographic surveys by downloading images relative to said structural elements in the portable peripheral unit.

10. Method according to claim 9, **characterised in that** said images relative to said structural elements are referred to the traffic signals and/or to commercial advertising.

11. Method according to claim 1, **characterised in that** said portable processing units are computers which avail themselves also of tridimentional digital models of the land under examination in order to process, as field check, sections, profiles and simulations of run.

12. Electronic device for carrying out the method according to claim 1 or 2, **characterised in that** it comprises at least one central processing server given transmission and reception means of digital images for memorising in said server and a plurality of peripheral units for consulting and/or modifying said images in bi-directional connection with said server.

**Patentansprüche**

1. Verfahren zum Erfassen, Verarbeiten und Veröffentlichen von Daten, die die Topographie und Morphologie einer vorbestimmten Landfläche oder eines Straßennetzes einer vorbestimmten Landfläche betreffen, zum Beispiel zur Erstellung eines Straßenverzeichnisses der Art, bei der von einem Flugzeug oder Hubschrauber aus mindestens eine Vermessung ausgeführt wird, wodurch eine Vielzahl von Digitalbildern, die in orthogonaler Beziehung zum Land stehen, und durch LIDAR oder eine ähnliche Technologie 3D-Laserpunkte eines Landabschnitts bereitgestellt werden, wobei der Landabschnitt Flächen mit morphologischer Veränderlichkeit oder auffällige strukturelle Elemente aufweist, mit den folgenden Schritten:

- a) Ableiten der strukturellen Elemente aus einem digitalen Geländemodell (DTM), das auf 3D-Laserpunkten basiert, und
Isolieren der 3D-Laserpunkte in Bezug auf diese vorbestimmte Landfläche;
- b) Interpretieren, Analysieren und Verarbeiten der Digitalbilder unter Differenzierung und Separierung zwischen den strukturellen Elementen auf dem Land und erhöhten Punkten, die zum Land selbst gehören,
- c) Überprüfen, dass die aus dem DTM abgeleiteten strukturellen Elemente den mittels des Digitalbilds separierten strukturellen Elementen entsprechen, für eine korrekte Georeferenzierung der Digitalbilder;
- d) Überlagern des DTM in Bezug auf das Land mit den Digitalbildern;
- e) Übertragen und Abspeichern der überlagerten Bilder in einer zentralen Datenspeicherungs-/Verarbeitungseinheit, die in einem Hauptcomputer enthalten ist, mit nachfolgender, auf Anforderung geschehender Übertragung auf und/oder Verarbeitung der Bilder und 3D-Laserpunktdaten und deren Veranschaulichungen in periphere(n) Netzwerkvorrichtungen, die mit dem Hauptcomputer verbunden sind;
- f) Integrieren der in den Digitalbildern und 3D-Laserpunkten enthaltenen Informationen durch eine auf dem Land erfolgende Echtzeitüberwachung der Vielzahl von strukturellen Elementen oder von weiteren strukturellen Elementen mittels einer tragbaren Vermessungs- und Verarbeitungseinheit, was durch ein Team von Vermessungstechnikern ausgeführt wird, die auf dem Land aktiv und mit mindestens einem elektronischen Computer ausgestattet sind, um durch einen Laserscanner vektorielle und alphanumerische Daten zu erfassen, die mittels einer GPRS-Kommunikation oder durch eine andere Art von Verbindung der Computer der Vermessungstechniker mit dem Hauptcomputer periodisch zum Hauptcomputer übertragen werden;

wobei sich die auf dem Land stattfindende Vermessung auf strukturelle und funktionale Elemente bezieht, die nicht von oben und auch nicht mittels des Interpretierungsschritts vermessen werden können.

2. Verfahren nach Anspruch 1, **dadurch gekennzeichnet, dass** die Vielzahl der Digitalbilder des Landes vorab einem Vergleich mit einem dreidimensionalen Digitalmodell desselben Landes unterzogen werden, wobei eine Aussage über die Korrektheit eines Bildes erhalten wird, und sie mit geographischen Referenzen versehen werden.

3. Verfahren nach Anspruch 1, wobei mittels eines geeigneten Algorithmus darüber hinaus eine Analyse der entlang des Straßennetzes bestehenden, durch den Fahrzeugverkehr erzeugten akustischen Verschmutzung bereitgestellt wird.

4. Verfahren nach Anspruch 3, wobei der Algorithmus unter Berücksichtigung des Digitalmodells des Landes, der Bauwerke und der relativen Vegetation eine Berechnung anstellt, um isophone Kurven zu erhalten und die Schallverteilung in der Umgebung darzustellen, und zwar vor und nach der Realisierung möglicher Strategeme, wie zum Beispiel von Schallschluckwänden.

5. Verfahren nach Anspruch 1, **dadurch gekennzeichnet, dass** der Schritt des Interpretierens der Bilder mittels einer Videodigitalisierung des Landes und von darauf befindlichen funktionellen und strukturellen Elementen, und durch Zuordnung graphischer Symbole zu jedem Bild erfolgt.

6. Verfahren nach Anspruch 2, **dadurch gekennzeichnet, dass** jedem Bild ein Datensatz zugeordnet wird, der durch Ebenen und Unterebenen definiert ist, wobei jede Ebene einem zu vermessenden funktionellen oder strukturellen Element zugeordnet ist.

7. Verfahren nach Anspruch 2, **dadurch gekennzeichnet, dass** es der Schritt des Interpretierens der Bilder ermöglicht, eine Datenbank aufzufüllen, indem jedem Bild beschreibende Informationen der Fläche, der Linie, eines bestimmten Punktes oder eines bestimmten Volumens zugeordnet wird, wobei alles automatisch berechnet und abgelegt wird.

8. Verfahren nach Anspruch 1, **dadurch gekennzeichnet, dass** die auf dem Land erfolgende Vermessung durch Nutzung eines GPS-Instruments ausgeführt wird, das an einen Eingangsanschluss der Verarbeitungseinheit angeschlossen ist, um eine leichte geographische Orientierung und Positionierung entsprechend den in der Peripherieeinheit verfügbaren photographischen Abbildungen zu ermöglichen.

9. Verfahren nach Anspruch 1, **dadurch gekennzeichnet, dass** die auf dem Land erfolgende Vermessung mit einer digitalen Photokamera ausgeführt wird, die an jeder Peripherieeinheit vorgesehen ist, um durch Herunterladen von Bildern in Bezug auf die strukturellen Elemente in der tragbaren Peripherieeinheit photographische Vermessungen auszuführen.

10. Verfahren nach Anspruch 9, **dadurch gekennzeichnet, dass** sich die Bilder in Bezug auf die strukturellen Elemente auf Verkehrssignale und/oder auf kommerzielle Werbung beziehen.

11. Verfahren nach Anspruch 1, **dadurch gekennzeichnet, dass** es sich bei den tragbaren Verarbeitungseinheiten um Computer handelt, die sich ihrerseits auch dreidimensionale Digitalmodelle des in Untersuchung befindlichen Landes zunutze machen, um als Feldprüfung Schnitte, Profile und Ablaufsimulationen zu verarbeiten.

12. Elektronische Vorrichtung zur Ausführung des Verfahrens nach Anspruch 1 oder 2, **dadurch gekennzeichnet, dass** sie mindestens einen zentralen Verarbeitungsserver aufweist, mit Sende- und Empfangseinrichtungen für Digitalbilder zur Abspeicherung in dem Server und einer Vielzahl von Peripherieeinheiten zum Heranziehen und/ oder Modifizieren der Bilder in bidirektionaler Verbindung mit dem Server.

**Revendications**

1. Procédé pour recueillir, traiter et publier des données concernant la topographie et la morphologie d'une zone de terrain prédéterminée ou d'un réseau routier d'une zone de terrain prédéterminée, par exemple pour la formation d'un registre de routes, du type dans lequel au moins un levé est effectué à partir d'un avion ou d'un hélicoptère, fournissant ainsi une pluralité d'images numériques référencées orthogonalement par rapport au terrain et de points de laser tridimensionnels d'une partie de terrain par LIDAR ou une technologie similaire, ladite partie de terrain comportant des zones avec une variabilité morphologique ou comportant des éléments structuraux particuliers, comprenant les étapes suivantes consistant à :

a) déduire des éléments structuraux d'après un modèle de terrain numérique (DTM), le DTM étant basé sur des points de laser tridimensionnels, et

isoler les points de laser tridimensionnels par rapport à cette zone de terrain prédéterminée ;

b) interpréter, analyser et traiter lesdites images numériques par différentiation et séparation entre les éléments structuraux sur le terrain et des points élevés appartenant au terrain lui-même ;

c) vérifier que les éléments structuraux déduits du DTM correspondent aux éléments structuraux séparés d'après ladite image numérique, pour un géoréférencement correct desdites images numériques ;

d) superposer lesdites images numériques au DTM relatif au terrain ;

e) transmettre et mémoriser lesdites images superposées dans un dispositif central de traitement de mémorisation de données, inclus dans un ordinateur principal, avec une transmission subséquente desdites images et données de points de laser tridimensionnels et/ou traitement et exemplifications de celles-ci à la demande de dispositifs de réseau périphériques connectés à l'ordinateur principal ;

f) intégrer les informations contenues dans lesdites images numériques et les points de laser tridimensionnels au moyen d'un levé du terrain en temps réel de ladite pluralité d'éléments structuraux ou d'autres éléments structuraux au moyen d'une unité de lever et de traitement portable transportée par une équipe de techniciens géomètres actifs au sol et pourvue d'au moins un ordinateur électronique pour recueillir, par l'intermédiaire d'un balayeur laser, des données vectorielles et alphanumériques qui sont transmises périodiquement audit ordinateur principal au moyen d'une communication GPRS ou par un autre type de connexion des ordinateurs des techniciens géomètres vers l'ordinateur principal ;

ledit lever de terrain s'intéressant aux éléments structuraux et fonctionnels qui ne peuvent pas être étudiés par le haut ou au moyen de ladite étape d'interprétation.

2. Procédé selon la revendication 1, **caractérisé en ce que** ladite pluralité d'images numériques du terrain est soumise au préalable à une comparaison avec un modèle numérique tridimensionnel du même terrain en obtenant une image qui est correcte et pourvue de références géographiques.

3. Procédé selon la revendication 1, dans lequel est en outre prévue une analyse de la pollution acoustique générée par le trafic de véhicules le long du réseau routier, au moyen d'un algorithme applicatif.

4. Procédé selon la revendication 3, dans lequel ledit algorithme, prenant en compte le modèle numérique du terrain, des ouvrages et de la végétation associée, applique un calcul pour obtenir des courbes isophoniques et représenter la dispersion du son dans l'environnement, avant et après la réalisation de stratagèmes possibles tels que, par exemple, de barrières absorbant les sons.

5. Procédé selon la revendication 1, **caractérisé en ce que** ladite étape d'interprétation des images s'effectue au moyen d'une numérisation vidéo du terrain et des éléments fonctionnels et structuraux placés sur celui-ci et en associant des symboles graphiques à chaque image.

6. Procédé selon la revendication 2, **caractérisé en ce qu'**à chaque image est associé un ensemble de données défini par des niveaux et des sous-niveaux, chaque niveau étant associé à un élément fonctionnel ou structurel à étudier.

7. Procédé selon la revendication 2, **caractérisé en ce que** ladite étape d'interprétation des images permet de remplir une base de données en associant des informations descriptives de la zone, de la ligne, d'un point donné ou d'un volume donné à chaque image, le tout étant calculé et enregistré automatiquement.

8. Procédé selon la revendication 1, **caractérisé en ce que** ledit levé du terrain est effectué en se servant d'un instrument GPS connecté à un port d'entrée de ladite unité de traitement, pour faciliter une orientation et un positionnement géographique d'après les images photographiques disponibles dans ladite unité périphérique.

9. Procédé selon la revendication 1, **caractérisé en ce que** ledit levé du terrain est effectué au moyen d'un appareil photo numérique prévu au niveau de chaque unité périphérique pour effectuer des études photographiques en téléchargeant des images relatives auxdits éléments structuraux sur l'unité périphérique portable.

10. Procédé selon la revendication 9, **caractérisé en ce que** lesdites images relatives auxdits éléments structuraux sont référencées par rapport aux feux de signalisation et/ou aux publicités commerciales.

11. Procédé selon la revendication 1, **caractérisé en ce que** lesdites unités de traitement portables sont des ordinateurs qui se servent eux-mêmes également des modèles numériques tridimensionnels du terrain en cours d'examen afin de traiter, en tant que complètement, des sections, des profils et des simulations d'étendue.

12. Dispositif électronique servant à exécuter le procédé selon les revendications 1 ou 2, **caractérisé en ce qu'**il comprend au moins un serveur de traitement central pourvu de moyens d'émission et de réception d'images numériques pour leur mémorisation dans ledit serveur et une pluralité d'unités périphériques servant à consulter et/ou modifier lesdites images en une connexion bidirectionnelle avec ledit serveur.

FIGURE 1

FIGURE 2

FIGURE 3

FIGURE 4

FIGURE 5

FIGURE 6

FIGURE 7

FIGURE 8

```
                              ┌──────────────────┐
                              │    CALAMITY      │
                              └──────────────────┘
                                       │
                                       ▼
                    ┌─────────────────────────────────┐
          ┌─────────│     Laser scanner survey        │─────────┐
          │         └─────────────────────────────────┘         │
          ▼                                                      ▼
┌───────────────────────┐                        ┌───────────────────────┐
│ Surveyed        data  │                        │ Orthorectification    │
│ extrapolation   and   │                        │ of     the    "true   │
│ filtration            │                        │ orthofoto" images     │
└───────────────────────┘                        └───────────────────────┘
          │                                                      │
          │         ┌─────────────────────────────────┐         │
          └────────▶│ "Project" preparation and WEB   │◀────────┘
                    │ publication                     │
                    └─────────────────────────────────┘
                                       │
                                       ▼
                    ┌─────────────────────────────────┐
                    │  Remote available functions     │
                    └─────────────────────────────────┘
                                       │
                                       ▼
                          ┌──────────────────────┐
          ┌───────────────│  Section and         │───────────────┐
          │               │  profile processing  │               │
          │               └──────────────────────┘               │
          ▼                                                       ▼
┌───────────────────────┐                        ┌───────────────────────────┐
│ Planimetric           │                        │ Talweg processing and     │
│ progressive           │                        │ section areas processing  │
│ definition            │                        │                           │
└───────────────────────┘                        └───────────────────────────┘
```

FIGURE 9

FIGURE 10

**EP 1 505 547 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19746639
- US 6154152 A